(19) Europäisches Patentamt
European Patent Office
Office européen des brevets

(11) **EP 1 568 571 B1**

(12) **EUROPÄISCHE PATENTSCHRIFT**

(45) Veröffentlichungstag und Bekanntmachung des
Hinweises auf die Patenterteilung:
**27.07.2011   Patentblatt 2011/30**

(51) Int Cl.:
*B62D 5/00* (2006.01)          *B62D 5/30* (2006.01)
*B62D 5/065* (2006.01)       *B62D 5/04* (2006.01)

(21) Anmeldenummer: **05001517.1**

(22) Anmeldetag: **26.01.2005**

(54) **Servounterstütztes Lenksystem für ein Kraftfahrzeug**

Servo steering system for a motor vehicle

Direction assistée pour un véhicule automobile

(84) Benannte Vertragsstaaten:
**DE FR GB IT SE**

(30) Priorität: **28.02.2004   DE 102004009817**

(43) Veröffentlichungstag der Anmeldung:
**31.08.2005   Patentblatt 2005/35**

(73) Patentinhaber: **ZF Lenksysteme GmbH**
**73527 Schwäbisch Gmünd (DE)**

(72) Erfinder:
• **Reinelt, Wolfgang, Dr.**
**73525 Schwäbisch Gmünd (DE)**
• **Schuster, Wolfgang**
**73453 Abtsgmünd (DE)**
• **Klier, Willy**
**73527 Schwäbisch Gmünd (DE)**

(56) Entgegenhaltungen:
EP-A- 1 093 992          US-A- 5 053 966
US-A- 5 198 981          US-A- 5 265 019
US-A1- 2003 069 675     US-B1- 6 640 923

EP 1 568 571 B1

**Beschreibung**

Stand der Technik

Die vorliegende Erfindung betrifft ein servounterstütztes Lenksystem für ein Kraftfahrzeugs. Das Lenksystem umfasst eine Lenkhandhabe zur Vorgabe eines Lenkradwinkels als Maß für einen gewünschten Lenkwinkel für mindestens ein lenkbares Rad des Kraftfahrzeugs. Außerdem umfasst das Lenksystem einen Servoantrieb zur Realisierung einer variablen Momentenunterstützung.

Die Erfindung betrifft außerdem ein Verfahren zum Betrieb eines servounterstützten Lenksystems eines Kraftfahrzeugs zur Realisierung einer variablen Momentenunterstützung. Dabei wird mittels einer Lenkhandhabe ein Lenkradwinkel als Maß für einen gewünschten Lenkwinkel für mindestens ein lenkbares Rad des Kraftfahrzeugs vorgegeben.

Schließlich betrifft die vorliegende Erfindung auch ein Computerprogramm, das auf einem Rechengerät, insbesondere auf einem Mikroprozessor, eines Steuergeräts für ein servounterstütztes Lenksystems eines Kraftfahrzeugs ablauffähig ist.

Ein Lenksystem der eingangs genannten Art ist beispielsweise aus der DE 100 13 711 A1 bekannt. Dort ist ein Lenksystem beschrieben, das unter anderem einen Servoantrieb zur Momentenunterstützung aufweist. Der Grad der Momentenunterstützung ist bei dem beschriebenen Lenksystem abhängig von der Fahrgeschwindigkeit des Kraftfahrzeugs. Während bei langsamer Fahrgeschwindigkeit die Momentenunterstützung größer ist (zum Beispiel um beim Rangieren des Fahrzeugs das Lenkrad ohne großen Kraftaufwand betätigen zu können), ist die Momentenunterstützung bei höheren Geschwindigkeiten (zum Beispiel um die Fahrstabilität bei einer Autobahnfahrt zu erhöhen) deutlich kleiner. Der Servoantrieb kann elektrisch oder hydraulisch arbeiten. Auch bei dem erfindungsgemäßen Lenksystem kann die Momentenunterstützung geschwindigkeitsabhängig variiert werden. Die Erfindung ist aber auch für solche Lenksysteme von Bedeutung, bei denen die Momentenunterstützung unabhängig von der Fahrgeschwindigkeit des Kraftfahrzeugs ist. In der US 6 640923 B1 wird ein Verfahren zum Lenken eines Fahrzeugs offebart, beim dem ein Lenkwinkel erfasst wird, der abhängig von der momentanen Fahrgeschwindigkeit des Fahrzeugs modifiziert wird indem ein Korrektur-Lenkwinkel als Sollvorgabewert bestimmt wird, der dem Lenkwinkel zur Bildung eines Soll-Lenkwinkels überlagert wird. Darüber hinaus wird eine Radlenkwinkelstellung der gelenkten Räder detektiert und mit dem Soll-Lenkwinkel zur Ermittlung einer Winkeldifferenz verglichen wird, wobei die Radlenkwinkelstellung in Abhängigkeit der Winkeldifferenz geregelt wird und der Korrektur-Lenkwinkel an der Lenksäule kompensiert wird.

Das aus der DE 100 13 711 A1 bekannte Lenksystem weist außer dem Servoantrieb auch Überlagerungsmittel auf, welche einen Zusatzwinkel generieren und den von der Lenkhandhabe vorgegebenen Lenkradwinkel mit dem Zusatzwinkel überlagern. Ein Lenksystem mit Überlagerungsmitteln ist außerdem aus der DE 40 31 316 A1 bekannt. Mit Hilfe der Überlagerungsmittel ist es möglich, einen von der Lenkhandhabe vorgegebenen Lenkradwinkel zur Erhöhung der Fahrstabilität und/ oder des Komforts mit einem Zusatzwinkel zu überlagern, so dass sich fahrdynamikabhängig und/ oder komfortabhängig ein variable Übersetzungsverhältnis zwischen Lenkradwinkel und mittlerem Lenkwinkel der lenkbaren Räder des Kraftfahrzeugs einstellt. Dadurch ist es sicherheitstechnisch möglich, ein Kraftfahrzeug, das droht auszubrechen, durch eine entsprechende Korrektur des Lenkwinkels wieder in eine stabile Fahrsituation zurückzuführen. Die Überlagerungsmittel können andere Fahrdynamikmittel (z. B. ein elektronisches Stabilitätsprogramm (ESP), ein Antiblockiersystem (ABS), eine Antriebsschlupfregelung (ASR), etc.) unterstützen. Komforttechnisch ist es möglich, einem Lenkradwinkel beispielsweise einen geschwindigkeitsabhängigen Zusatzwinkel zu überlagern. Dadurch kann bei niedrigen Fahrzeuggeschwindigkeiten eine relativ kleines Übersetzungsverhältnis einzustellen, das heißt eine relativ geringe Drehung der Lenkhandhabe führt zu einem relativ großen Lenkwinkel der Räder. Bei hohen Fahrzeuggeschwindigkeiten kann dagegen ein relativ großes Übersetzungsverhältnis eingestellt werden, so dass sich die Fahrstabilität des Kraftfahrzeugs verbessert. Auch das erfindungsgemäße Lenksystem kann Überlagerungsmittel aufweisen. Die Erfindung ist aber auch für solche Lenksysteme von Bedeutung, die keine Überlagerungsmittel aufweisen.

Der vorliegenden Erfindung liegt die Aufgabe zugrunde, die Funktionssicherheit, Zuverlässigkeit und Verfügbarkeit von Lenksystemen der eingangs genannten Art zu verbessern.

Zur Lösung dieser Aufgabe wird ausgehend von dem Lenksystem der eingangs genannten Art vorgeschlagen, dass der Grad der Momentenunterstützung von einer die Drehgeschwindigkeit der Lenkhandhabe charakterisierenden Größe abhängig ist.

Vorteile der Erfindung

Erfindungsgemäß wird also vorgeschlagen, dass der Grad der Momentenunterstützung eines Servoantriebs des Lenksystems in Abhängigkeit von einer die Drehgeschwindigkeit der Lenkhandhabe charakterisierenden Größe abhängig ist. Bei dieser Größe handelt es sich nicht um eine Winkelgröße, sondern um eine Geschwindigkeitsgröße. Erfindungsgemäß ist bei der charakterisierenden Größe auch an die Drehgeschwindigkeit eines Ritzels eines Lenkgetriebes des Lenksystems gedacht. Der Ritzelwinkel ergibt sich aus einer Überlagerung des Lenkradwinkels mit einem Zusatzwinkel, der von Überlagerungsmitteln zur Verbesserung des Komforts und/oder der Fahrdynamik generiert wird. Die Drehgeschwindigkeit der Lenkhandhabe oder eine diese charakterisierende Größe erlaubt eine zuverlässige Aussage über die derzeit vorliegende Fahrsituation des Fahrzeugs.

Ein Vorteil des erfindungsgemäßen Lenksystems ist darin zu sehen, dass das Lenksystem eine sicherere und ruhigere Lenkung des Kraftfahrzeugs ermöglicht. Das Lenkgefühl wird für einen Fahren positiv beeinflusst. Insbesondere können sich auf die Lenkhandhabe störend auswirkende Momentensprünge verhindert werden.

Gemäß einer vorteilhaften Weiterbildung der vorliegenden Erfindung wird vorgeschlagen, dass der Grad der Momentenunterstützung von einer die Fahrgeschwindigkeit des Kraftfahrzeugs charakterisierenden Größe abhängig ist. Dadurch, dass der Grad der Momentenunterstützung in Abhängigkeit von der die Fahrgeschwindigkeit des Kraftfahrzeugs charakterisierenden Größe ermittelt wird, kann das Lenkgefühl für den Fahrer positiv beeinflusst werden, indem das notwendige Lenkmoment bei langsamer Fahrt minimiert wird. Bei schnellen Fahrten sorgt ein hohes Lenkmoment für eine erhöhte Stabilität des Kraftfahrzeugs. Zusammen mit der weiter oben vorgeschlagenen Variation der Momentenunterstützung des Servoantriebs in Abhängigkeit von der Drehgeschwindigkeit der Lenkhandhabe oder eines Ritzels eines Lenkgetriebes ergibt sich ein für den Fahrer gefühlsmäßig besonders sicheres, zuverlässiges und komfortables Lenksystem.

Gemäß einer bevorzugten Ausführungsform der vorliegenden Erfindung wird vorgeschlagen, dass das Lenksystem ein elektronisches Steuergerät zur Ansteuerung des Servoantriebs aufweist, wobei das Steuergerät den Servoantrieb in Abhängigkeit von der die Drehgeschwindigkeit der Lenkhandhabe charakterisierenden Größe ansteuert. Das Steuergerät hat also als Eingangsgrößen unter anderem die Drehgeschwindigkeit der Lenkhandhabe oder des Ritzels des Lenkgetriebes und ermittelt anhand der Eingangsgrößen ein geeignetes Ansteuersignal für den Servoantrieb. Alternativ liegen an dem Steuergerät Größen des Lenksystems und/ oder des Kraftfahrzeugs an, aus den das Steuergerät dann die Drehgeschwindigkeit der Lenkhandhabe oder die diese charakterisierende Größe ermittelt. Zusätzlich kann als Eingangsgröße auch die Fahrgeschwindigkeit des Kraftfahrzeugs an dem Steuergerät anliegen und bei der Berechnung des Ansteuersignals für den Servoantrieb mit berücksichtigt werden.

Vorteilhafterweise ist der Servoantrieb als ein hydraulischer Servoantrieb mit einem elektro-hydraulischen Wandler zur Variation des Grades der Momentenunterstützung ausgebildet, wobei das Steuergerät den Wandler ansteuert. Der hydraulische Servoantrieb umfasst eine Hydraulikpumpe, welche zur Momentenunterstützung eine Hydraulikflüssigkeit über den Wandler in das Lenkgetriebe fördert. Durch die Höhe des Drucks der Hydraulikflüssigkeit in dem Lenkgetriebe kann der Grad der Momentenunterstützung variiert werden. Die Höhe des Drucks kann über die Menge der geförderten Hydraulikflüssigkeit eingestellt werden, die wiederum über den Wandler verändert werden kann. Der Wandler ist beispielsweise als ein elektromagnetisch oder piezoelektrisch betätigbares Ventil ausgebildet.

Alternativ wird vorgeschlagen, dass der Servoantrieb als ein elektrischer Servoantrieb mit einem Elektromotor zur Realsierung der variablen Momentenunterstützung ausgebildet ist, wobei das Steuergerät den Elektromotor ansteuert. Durch den Elektromotor und ein geeignetes Überlagerungsgetriebe kann eine Momentenunterstützung der Lenkbewegung erfolgen. Der Grad der Momentenunterstützung kann durch eine entsprechende Ansteuerung des Elektromotors variiert werden.

Gemäß einer anderen vorteilhaften Weiterbildung der Erfindung wird vorgeschlagen, dass das Lenksystem ein Lenkgetriebe mit einem Ritzel aufweist, das einen von dem Lenkradwinkel abhängigen Ritzelwinkel in einen Lenkwinkel des mindestens einen lenkbaren Rades umsetzt, wobei die Drehgeschwindigkeit des Ritzels als die die Drehgeschwindigkeit der Lenkhandhabe charakterisierende Größe herangezogen wird. Aufgrund des - bis auf gewisse Nichtlinearitäten am Lenkanschlag - festen Übersetzungsverhältnisses zwischen Ritzel und lenkbaren Rädern, entspricht der Ritzelwinkel im wesentlichen dem Lenkwinkel der lenkbaren Räder bzw. ist die Ritzelwinkelgeschwindigkeit im wesentlichen proportional zu der Lenkwinkelgeschwindigkeit der lenkbaren Räder. Der Vorteil der Berücksichtigung der Ritzelwinkelgeschwindigkeit liegt darin, dass in dem Ritzelwinkel auch die Auswirkungen eines Zusatzwinkels von Überlagerungsmitteln zur Verbesserung der Fahrdynamik und/oder des Komforts des Fahrzeugs enthalten sind, falls Überlagerungsmittel vorhanden sind.

Gemäß einer weiteren bevorzugten Ausführungsform der Erfindung wird vorgeschlagen, dass das Lenksystem Überlagerungsmittel zum Generieren eines Zusatzwinkels und zur Ermittlung des Ritzelwinkels aus einer Überlagerung des Lenkradwinkels mit dem Zusatzwinkel aufweist. Der Zusatzwinkel wird nach dem Gesichtspunkt einer Erhöhung der Fahrstabilität und/oder des Fahrkomforts des Kraftfahrzeugs ermittelt. Die Überlagerungsmittel umfassen einen Elektromotor, der vorzugsweise als ein Asynchronmotor ausgebildet ist, zum Generieren des Zusatzwinkels und ein Überlagerungsgetriebe, das beispielsweise als ein Planetengetriebe ausgebildet ist, um den Lenkradwinkel mit dem Zusatzwinkel zu überlagern. Der sich durch die Überlagerung ergebende Ritzelwinkel wird durch das Lenkgetriebe in einen entsprechenden Lenkwinkel der lenkbaren Räder umgesetzt. Diese Ausführungsform hat den Vorteil, dass bei einer schlechten Ansteuerung des Elektromotors der Überlagerungsmittel, die daraus resultierenden störenden Auswirkungen auf die Lenkhandhabe kompensiert werden können. Eine schlechte Ansteuerung des Motors bedeutet insbesondere, dass der Motor stufenförmig angesteuert wird. Unter dem Strich ergibt sich eine momentenverträgliche Winkelüberlagerung durch die Überlagerungsmittel.

Vorteilhafterweise ermittelt das Steuergerät in Abhängigkeit von der die Drehgeschwindigkeit der Lenkhandhabe charakterisierenden Größe ein elektrisches Ansteuersignal für den Servoantrieb. Das elektrische Ansteuersignal ist vorzugsweise ein Ansteuerstrom. Zur Variation des Ansteuerstroms kann entweder dessen Amplitude variiert oder aber der Ansteuerstrom pulsweitenmoduliert werden. Es ist besonders bevorzugt, wenn das ermittelte elektrische Ansteuersignal als Sollwert in eine Ansteuersignalregelung einfließt, wobei das geregelte Ansteuersignal zur Ansteuerung des Servoantriebs herangezogen wird.

Gemäß einer weiteren bevorzugten Ausführungsform der Erfindung wird vorgeschlagen, dass das Lenksystem Sensoren zum Erfassen von die Geschwindigkeit der Lenkhandhabe charakterisierenden Größen aufweist. Der Sensor kann beispielsweise als ein Winkelsensor ausgebildet sein, dessen Messwert nach der Zeit differenziert wird, um die entsprechende Drehgeschwindigkeit für den Winkel zu erhalten. Vorteilhafterweise misst ein Sensor die die Geschwindigkeit der Lenkhandhabe charakterisierende Größe unmittelbar. Alternativ wird vorgeschlagen, dass das Lenksystem Mittel zum Ermitteln der die Geschwindigkeit der Lenkhandhabe charakterisierenden Größe aus den gemessenen Größen aufweist. Die Mittel umfassen beispielsweise ein Modell des Lenksystems, durch das die gewünschte Größe, welche die Drehgeschwindigkeit der Lenkhandhabe charakterisiert, anhand von anderen Eingangsignalen des Lenksystems oder des Kraftfahrzeugs ermittelt werden kann.

Als eine weitere Lösung der Aufgabe der vorliegenden Erfindung wird ausgehend von dem Verfahren der eingangs genannten Art vorgeschlagen, dass der Grad der Momentenunterstützung in Abhängigkeit von einer die Drehgeschwindigkeit der Lenkhandhabe charakterisierenden Größe ermittelt wird.

Gemäß einer vorteilhaften Weiterbildung der Erfindung wird vorgeschlagen, dass der Grad der Momentenunterstützung außerdem in Abhängigkeit von einer die Fahrgeschwindigkeit des Kraftfahrzeugs charakterisierenden Größe ermittelt wird.

Gemäß einer bevorzugten Ausführungsform der Erfindung wird vorgeschlagen, dass das Lenksystem ein Lenkgetriebe mit einem Ritzel aufweist, durch das ein von dem Lenkradwinkel abhängiger Ritzelwinkel in einen Lenkwinkel des mindestens einen lenkbaren Rades umgesetzt wird, wobei die Drehgeschwindigkeit des Ritzels als die die Drehgeschwindigkeit der Lenkhandhabe charakterisierende Größe herangezogen wird.

Von besonderer Bedeutung ist die Realisierung des erfindungsgemäßen Verfahrens in der Form eines Computerprogramms. Dabei ist das Computerprogramm auf einem Rechengerät, insbesondere auf einem Mikroprozessor, ablauffähig und zur Ausführung des erfindungsgemäßen Verfahrens geeignet. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm programmiert ist. Das Computerprogramm ist vorzugsweise auf einem Speicherelement abgespeichert. Als Speicherelement kann insbesondere ein elektrisches Speichermedium zur Anwendung kommen, beispielsweise ein Random-Access-Speicher, ein Read-Only-Speicher oder ein Flash-Speicher. Das Speicherelement kann aber auch als ein magnetisches Speichermedium (z. B. Diskette, Festplatte, Speicherband) oder optisches Speichermedium (z. B. DVD, CD-ROM, etc.) ausgebildet sein.

Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:

Figur 1     ein erfindungsgemäßes Lenksystem für ein Kraftfahrzeug gemäß einer bevorzugten Ausführungsform;

Figur 2     ein Ablaufdiagramm einer Ansteuerung für einen Servoantrieb eines erfindungsgemäßen Lenksystems gemäß Figur 1;

Figur 3     einen Ausschnitt des Ablaufdiagramms aus Figur 2 zur Signalverarbeitung einer Ritzelwinkelgeschwindigkeit;

Figur 4     einen Ausschnitt des Ablaufdiagramms aus Figur 3 zur Signalverarbeitung einer Fahrgeschwindigkeit des Kraftfahrzeugs;

Figur 5     einen Ausschnitt des Ablaufdiagramms aus Figur 3 zur Signalverarbeitung der Ritzelwinkelgeschwindigkeit; und

Figur 6     einen Ausschnitt des Ablaufdiagramms aus Figur 2 zur Berechnung eines Ansteuersignals für den Servoantrieb.

Beschreibung der Ausführungsbeispiele

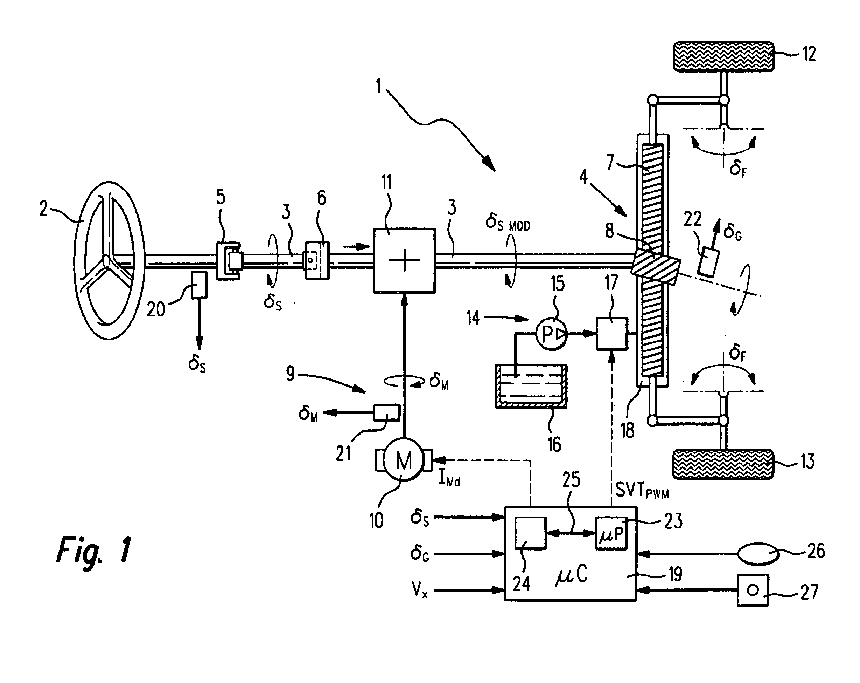

In Figur 1 ist ein erfindungsgemäßes Lenksystem eines Kraftfahrzeugs in seiner Gesamtheit mit dem Bezugszeichen 1 bezeichnet. Das Lenksystem 1 umfasst eine Lenkhandhabe 2, die beispielsweise als ein Lenkrad, als eine Lenkstange oder als Lenkknüppel ausgebildet sein kann. Die Lenkhandhabe 2 steht über eine Gelenkwelle 3 mit einem Lenkgetriebe 4 in Verbindung. Die Gelenkwelle 3 ist je nach Ausführungsform des Lenksystems 1 durch ein oder mehrere Kardangelenke 5, 6 unterbrochen. Das Lenkgetriebe 4 dient dazu, einen Drehwinkel der Gelenkwelle 3 in einen Lenkwinkel $\delta\_F$ von zu lenkenden Rädern 12, 13 des Kraftfahrzeugs umzusetzen. Das Lenkgetriebe 4 umfasst in der in Figur 1 dargestellten Ausführungsform eine Zahnstange 7 und ein Ritzel 8, an das die Gelenkwelle 3 angreift. Das Lenksystem 1 weist außerdem Überlagerungsmittel 9 auf, die einen Elektromotor 10 und ein von diesem angetriebenes Überlagerungsgetriebe 11 in Form eines Planetengetriebes umfassen.

Durch die Lenkhandhabe 2 wird ein Lenkradwinkel $\delta\_S$ als Maß für einen gewünschten Lenkwinkel $\delta\_F$ der lenkbaren Räder 12, 13 des Kraftfahrzeugs vorgegeben. Mit Hilfe des Motors 10 der Überlagerungsmittel 9 wird ein Zusatzwinkel $\delta\_M$ generiert und mittels des Überlagerungsgetriebes 11 dem Lenkradwinkel $\delta\_S$ überlagert. Der Zusatzwinkel $\delta\_M$ wird zur Verbesserung der Fahrdynamik des Kraftfahrzeugs und/ oder des Komforts generiert. Der Summenwinkel von Lenkradwinkel $\delta\_S$ und Zusatzwinkel $\delta\_M$ wird als Ritzelwinkel $\delta\_G$ bezeichnet.

Im Bereich des Lenkgetriebes 4 ist ein Servoantrieb 14 angeordnet, der zur Momentenunterstützung dient und auch als elektrohydraulischer Wandler bezeichnet wird. Der Servoantrieb 14 umfasst eine Hydraulikpumpe 15, die eine Hydraulikflüssigkeit aus einem Vorratsbehälter 16 über ein Hydraulikventil 17 in das Lenkgetriebe 4 fördert. Genauer gesagt, sind die Lenkstange 7 und das Ritzel 8 in einem Gehäuse 18 des Lenkgetriebes 4 angeordnet. Das Hydraulikventil 17 ist elektromagnetisch oder über einen Piezoaktor betätigbar. In der Regel umfasst ein Servoantrieb 14 mehrere Hydraulikventile 17, von denen in Figur 1 aber nur eines dargestellt ist. Über das Hydraulikventil 17 wird der Fluss der Hydraulikflüssigkeit an das eine oder das andere Ende der Lenkstange 7 gesteuert, und so eine Momentenunterstützung in die eine oder andere Richtung bewirkt. Über die Menge und damit den Druck der in das Gehäuse 18 des Lenkgetriebes 4 geförderten Hydraulikflüssigkeit kann die Stärke der Momentenunterstützung variiert werden. Statt des dargestellten hydraulischen Servoantriebs 14 kann auch ein elektrischer Servoantrieb mit einem Elektromotor zur Momentenunterstützung vorgesehen werden. Dann wird der Grad der Momentenunterstützung durch Ansteuerung des Elektromotors variiert.

Das Lenksystem 1 verfügt außerdem über ein Steuergerät 19, das unter anderem zur Ansteuerung des Motors 10 der Überlagerungsmittel 9 und des Hydraulikventils 17 des Servoantriebs 14 dient. Dazu wird der Motor 10 mit einem Ansteuersignal I_Md und das Hydraulikventil mit einem Ansteuersignal SVT_PWM beaufschlagt. Das Ansteuersignal SVT_PWM wird einer Ansteuersignalregelung als Sollwert zugeführt, welche das Ansteuersignal auf den vorgegebenen Wert regelt. Der geregelte Wert wird dann dem Hydraulikventil 17 zugeführt. In dem vorliegenden Ausführungsbeispiel wird das Hydraulikventil 17 derart angesteuert, dass sich in Abhängigkeit von der Fahrgeschwindigkeit V_x des Kraftfahrzeugs eine variable Momentenunterstützung einstellt. So ist es beispielsweise möglich, bei niedrigen Fahrgeschwindigkeiten V_x eine hohe Momentenunterstützung zu wählen, um das Rangieren des Fahrzeugs zu erleichtern, und bei hohen Geschwindigkeiten V_x (z. B. bei zügiger Überland- oder Autobahnfahrt) eine niedrige Momentenunterstützung einzustellen, um eine fahrdynamisch besonders stabile Lenkung des.Fahrzeugs zu ermöglichen. Auf die fahrgeschwindigkeitsabhängige Momentenunterstützung durch den Servoantrieb 14 kann jedoch auch verzichtet werden.

In dem dargestellten Ausführungsbeispiel erfolgt die Ansteuerung des Motors 10 in Abhängigkeit von der Fahrgeschwindigkeit V_x des Kraftfahrzeugs, das heißt das Übersetzungsverhältnis zwischen dem Lenkradwinkel $\delta\_S$ und dem Ritzelwinkel $\delta\_G$ bzw. dem Lenkwinkel $\delta\_F$ der Räder 12, 13 wird durch die Überlagerung des Lenkwinkels $\delta\_S$ mit verschiedenen, geschwindigkeitsabhängigen Zusatzwinkeln $\delta\_M$ in Abhängigkeit von der Fahrgeschwindigkeit V_x eingestellt. Dadurch ist es beispielsweise möglich, bei niedrigen Fahrzeuggeschwindigkeiten V_x ein relativ kleines Übersetzungsverhältnis einzustellen, das heißt eine relativ geringe Drehung der Lenkhandhabe 2 führt zu einem relativ großen Lenkwinkel $\delta\_F$ der Räder 12, 13. Bei hohen Fahrzeuggeschwindigkeiten V_x kann dagegen ein relativ großes Übersetzungsverhältnis eingestellt werden, so dass sich die Fahrstabilität des Kraftfahrzeugs verbessert. Auf die fahrgeschwindigkeitsabhängige Einstellung des Übersetzungsverhältnisses zwischen der Lenkhandhabe 2 und den Rädern 12, 13 kann jedoch auch verzichtet werden.

Um die genannten Steuerungsfunktionen ausführen zu können, liegt an dem Steuergerät 19 ein Geschwindigkeitssignal V_x an. Außerdem verfügt das Lenksystem 1 über einen oder mehrere geeignete Drehwinkelsensoren 20, 21, 22, welche den Lenkradwinkel $\delta\_S$, den Zusatzwinkel $\delta\_M$ und den Ritzelwinkel $\delta\_G$ messen. Eines oder mehrere der Drehwinkelsignale $\delta\_S$, $\delta\_M$ und $\delta\_G$ werden ebenfalls an das Steuergerät 19 geführt.

Erfindungsgemäß wird die Funktionssicherheit, die Zuverlässigkeit und die Verfügbarkeit des Lenksystems 1 dadurch verbessert, dass der Grad der Momentenunterstützung durch den Servoantrieb 14 in Abhängigkeit von einer die Drehgeschwindigkeit der Lenkhandhabe 2 charakterisierenden Größe variiert wird. Das heißt also, dass das Ansteuersignal SVT_PWM abhängig von der charakterisierenden Geschwindigkeitsgröße ist. Als charakterisierende Größe kann beispielsweise die Drehgeschwindigkeit $\ddot{\delta}_S$ der Lenkhandhabe 2 oder die Drehgeschwindigkeit $\ddot{\delta}_G$ des Ritzels 8 herangezogen werden. Die Berücksichtigung der Ritzelwinkelgeschwindigkeit $\dot{\delta}_G$ anstelle der Lenkradwinkelgeschwindigkeit $\dot{\delta}_S$ hat den Vorteil, dass damit automatisch auch die Zusatzwinkelgeschwindigkeit $\dot{\delta}_M$ der Überlagerungsmittel 9 mit berücksichtigt wird.

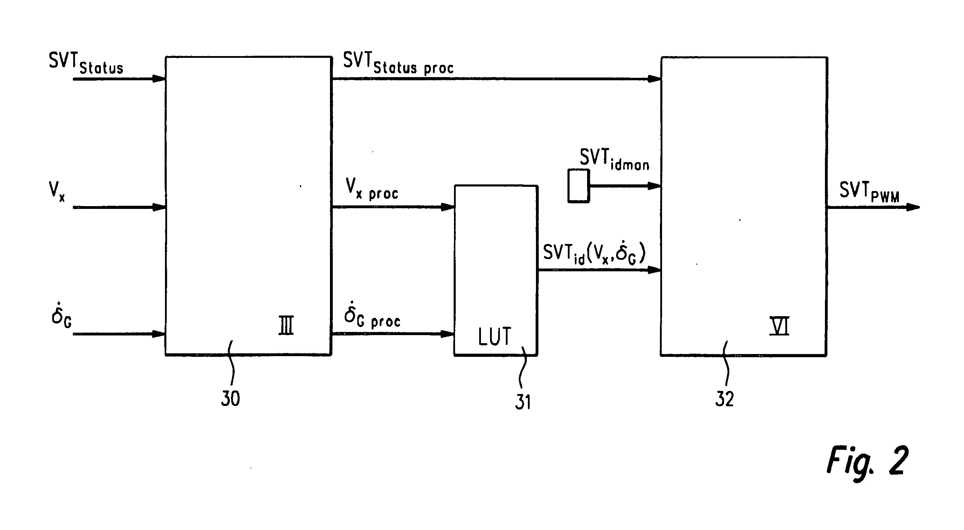

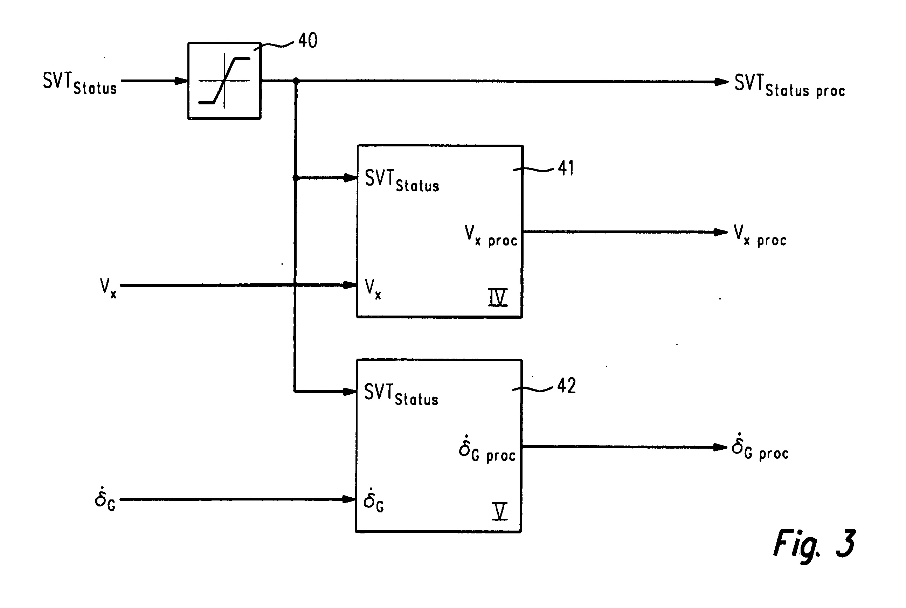

Nachfolgend wird anhand der Figur 2 ein bevorzugtes Ausführungsbeispiel der Erfindung näher erläutert, bei dem der Grad der Momentenunterstützung durch den Servoantrieb 14 in Abhängigkeit von der Ritzelwinkelgeschwindigkeit $\dot{\delta}_G$ variiert wird und das Hydraulikventil 17 entsprechend angesteuert wird. Links in Figur 2 sind die Funktionseingänge SVT_Status, Fahrgeschwindigkeit V_x und Ritzelwinkelgeschwindigkeit $\dot{\delta}_G$ angegeben, wohingegen rechts das Ansteuersignal SVT_PWM als Funktionsausgang angegeben ist. Die Funktonseingänge werden an einen ersten Funktionsblock 30 geführt, der zur Vorverarbeitung der an den Funktioneingängen anliegenden Signale dient und in Figur 3 näher erläutert wird. In diesem Funktionsblock 30 werden die Signale Fahrzeuggeschwindigkeit V_x und Ritzelwinkelgeschwindigkeit $\dot{\delta}_G$ gefiltert und geeignete Maßnahmen bei Ausfall einzelner Signale eingeleitet.

Zwei der Ausgangssignale V_x_proc (proc steht für processed = verarbeitet) und $\dot{\delta}_{G\,proc}$ des ersten Funktionsblocks 30 werden an einen zweiten Funktionsblock 31 geführt, der ein Kennfeld (look-up table, LUT) umfasst. Bei dem Kennfeld handelt es sich vorzugsweise um ein zweidimensionales Kennfeld, das die folgenden Parameter umfasst: einen Eingangsvektor für die Fahrgeschwindigkeit V_x des Kraftfahrzeugs, einen Eingangsvektor mit dem Betrag der Ritzelwinkelgeschwindigkeit $\dot{\delta}_G$ und entsprechende Wert für den Sollstrom für das Hydraulikventil 17.

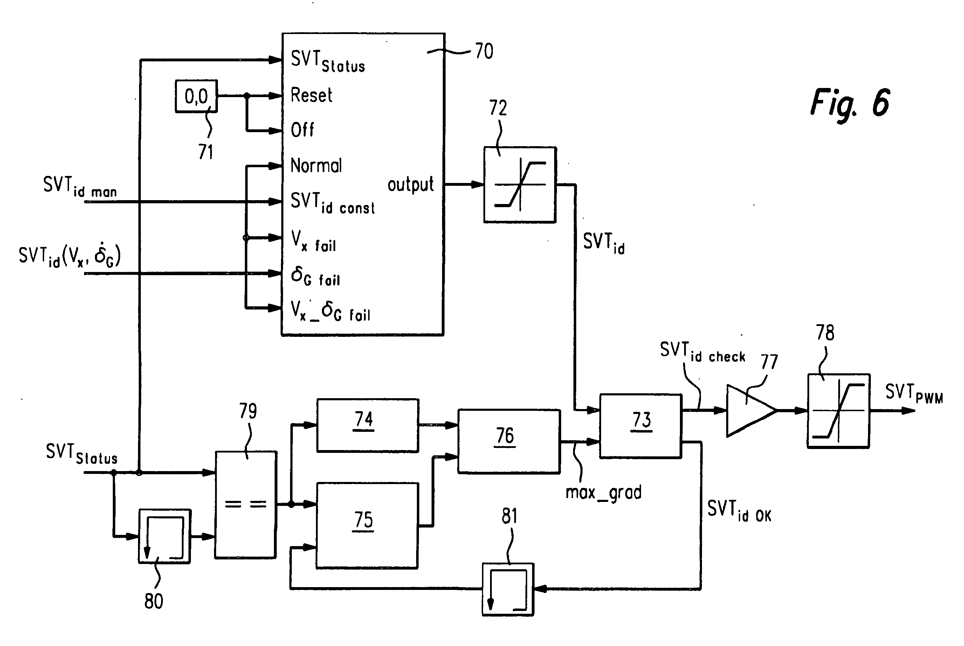

Ein Ausgangssignal SVT_id(V_x, $\dot{\delta}_G$) des zweiten Funktionsblocks 31 wird an einen dritten Funktionsblock 32 geführt, der anhand der Figur 6 näher erläutert wird. In dem Funktionsblock 32 werden basierend auf einen vorgegebenen Sollstrom SVT_id(V_x, $\dot{\delta}_G$) in Abhängigkeit des Funktionsstatus SVT_status bzw. SVT_status_proc das pulsweitenmodulierte Ansteuersignal SVT PWM für die dem Hydraulikventil 17 vorgeschaltete (nicht dargestellte) Stromregelung generiert. Im Falle eines erfolgten Statuswechsels wird ein Sprung in dem Sollsignal durch Anfahren des neuen Werts mittels einer Rampe vermieden. Zur Realisierung dieser Funktion liegen an dem dritten Funktionsblock 32 noch das Ausgangssignal SVT_status_proc des ersten Funktionsblocks 30 und eine vorgebbare Konstante SVT_id_man an. Die Konstante dient zur Vorgabe eines konstanten Sollstromes für das Hydraulikventil 17 des Servoantriebs 14. Dieser Wert ist aktiv, wenn der Funktionsstatus in einen Konstantmodus umgeschaltet wird, das heißt wenn der Funktionseingang SVT_status auf den entsprechenden Wert gesetzt wird.

Sowohl das Kennfeld in dem Funktionsblock 32 als auch die Konstante SVT_id_man sind von Kunden, das heißt von dem Hersteller des Kraftfahrzeugs, applizierbare Parameter.

In Figur 3 ist der erste Funktionsblock 30 aus Figur 2 näher dargestellt. Der Funktionsblock 30 enthält die Signalaufbereitungen der Eingangssignale. In einem ersten Funktionsblock 40 wird der Funktionsstatus SVT_status auf einen zulässigen Wertebereich, beispielsweise von -2 bis +4 begrenzt.

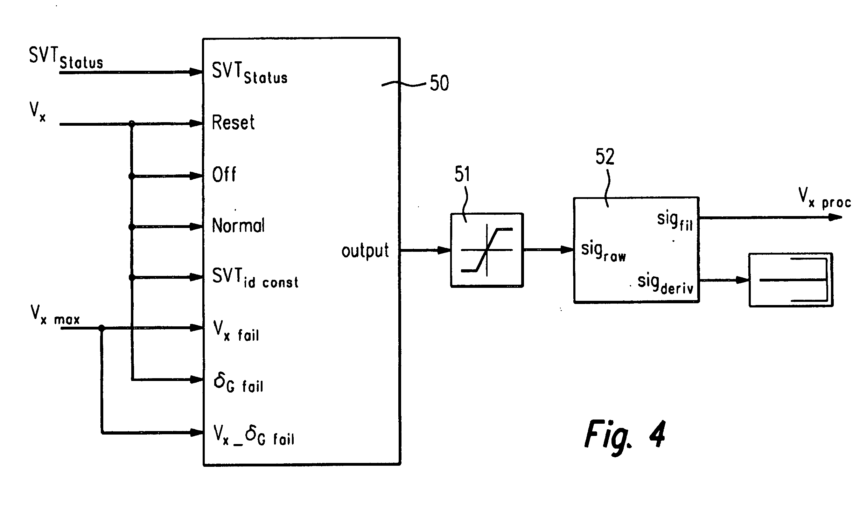

In einem zweiten Funktionsblock 41 wird das Signal der Fahrzeuggeschwindigkeit V_x aufbereitet. Der zweite Funktionsblock 41 ist anhand der Figur 4 näher erläutert. In dem Funktionsblock 41 ist zunächst ein Funktionsschalter 50 vorgesehen, mit welchem abhängig von dem anliegenden Funktionsstatus SVT_status zwischen einem Sensorsignal und einem konstanten Wert als sichere Rückfallebene umgeschaltet werden kann. Falls ein Fehler in dem Geschwindigkeitssignal V_x detektiert wird, wird der Funktionsstatus in die Rückfallebene umgeschaltet. Anschließend erfolgt eine Begrenzung des Ritzelwinkelgeschwindigkeitssignals $\dot{\delta}_G$ in einem Funktionsblock 51 mit anschließender Tiefpassfilterung in einem Funktionsblock 52. Der Algorithmus für die Tiefpassfilterung wird wie folgt implementiert:

$$x_{fil} = \frac{T \cdot K \cdot x(t) + x_{fil}(t-1)}{1 - T \cdot (-K)} \qquad (1)$$

wobei mit T die Abtastzeit, mit K ein applizierbarer Filterkoeffizient, mit x(t) ein aktueller Signalwert und mit x_fil(t-1) ein gefilterter Signalwert aus dem vorherigen Schritt (wird zu Beginn auf 0 initialisiert) sind.

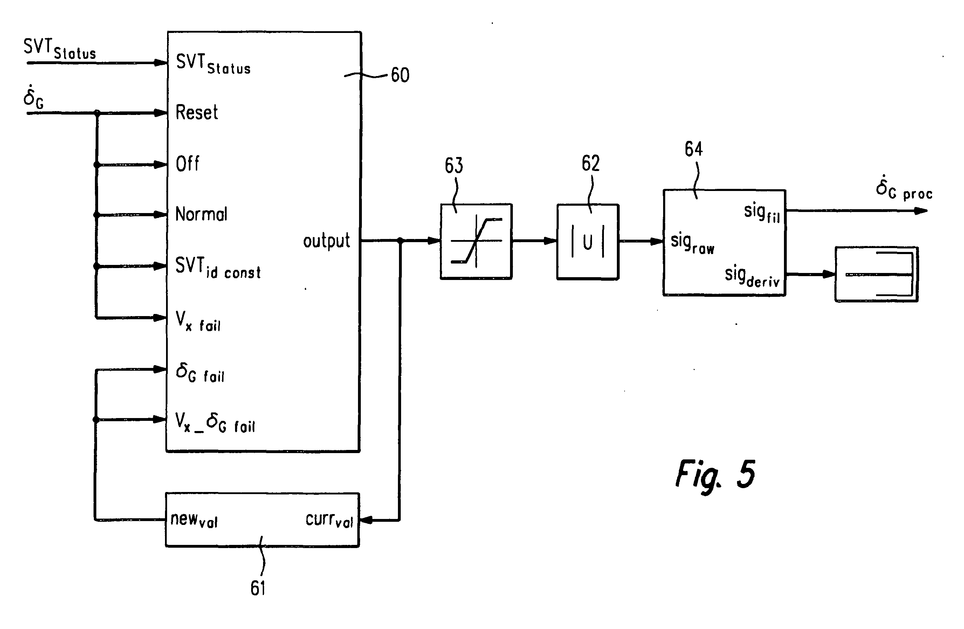

In einem dritten Funktionsblock 42 erfolgt eine Signalaufbereitung der Ritzelgeschwindigkeit $\dot{\delta}_G$, welche in dem dargestellten Ausführungsbeispiel im wesentlichen der Signalaufbereitung für die Fahrgeschwindigkeit V_x entspricht. Der dritte Funktionsblock 42 ist anhand der Figur 5 näher erläutert. Im Falle eines Sensorfehlers (SVT_status nimmt entsprechenden Fehlerwert an), wird in dem dritten Funktionsblock 42 durch den Funktionsschalter 60 nicht auf einen konstanten Wert umgeschaltet, sondern mittels einer Rampe von dem letzten gültigen Wert auf 0 zurückgefahren. Dies passiert in einem Funktionsblock 61. Ein weiterer Unterschied zu dem in Figur 4 dargestellten Ablauf liegt in einer Betragsbildung in einem Funktionsblock 62, welche der Signalbegrenzung im Funktionsblock 63 nachgeschaltet ist. Für die nachgeschaltete Verarbeitung (unter anderem für die Tiefpassfilterung in einem Funktionsblock 64) liegt das Signal in absoluter Form vor.

In Figur 6 ist der Funktionsblock 32 aus Figur 2 im Detail dargestellt, in dem basierend auf einen vorgegebenen Sollstrom SVT_id(V_x, $\dot{\delta}_G$) in Abhängigkeit des Funktionsstatus SVT_status bzw. SVT_status_proc das pulsweitenmodulierte Ansteuersignal SVT_PWM für die dem Hydraulikventil 17 vorgeschaltete (nicht dargestellte) Stromregelung generiert wird. Hierbei wird durch einen ersten Funktionsblock 70 anhand des aktuellen Funktionsstatus SVT_status zunächst der zugehörige Sollstrom gewählt. Steht SVT_status auf Reset bzw. auf Off, dann soll der Servoantrieb 14 nicht bestromt werden (i_d = 0 A). Bei SVT_status = SVT_id_const wird der konstant vorgegebene Wert 71 gewählt. In den restlichen Stati wird der aus dem Kennfeld vorliegende Sollstrom $SVT\_id(V\_x, \dot{\delta}_G)$ gewählt. Im Anschluss an die Stromauswahl erfolgt in einem zweiten Funktionsblock 72 die Begrenzung des gewählten Signals.

In einem weiteren Funktionsblock 73 wird der Gradient des Sollsignals SVT_id begrenzt. Der an dem Eingang der Gradientenbegrenzung anliegende Maximalgradient max_grad wird anhand der in den Blöcken 74 und 75 ausgewerteten Informationen variiert. In dem Funktionsblock 74 sind alle Bedingungen enthalten, welche eine Verkleinerung des Maximalgradienten max_grad erfordern. Im vorliegenden Fall soll der maximal zulässige Gradient immer dann herabgesetzt werden, wenn ein Statuswechsel stattfindet. Das Ausgangssignal des Funktionsblocks 74 liefert eine Aussage darüber, ob eine Verringerung des Gradienten erforderlich ist oder nicht. In dem Funktionsblock 75 wird festgelegt, ab wann der Gradient wieder erhöht werden kann, das heißt ein Normalbetrieb wieder möglich ist. In dem Servoantrieb 14 wird der Gradient wieder erhöht, sobald die letzte Überprüfung des Gradienten max_grad in dem Funktionsblock 73 in Ordnung war und momentan kein Statuswechsel vorliegt. Das Ausgangssignal des Funktionsblocks 75 liefert eine Aussage darüber, ob eine Erhöhung des Gradienten möglich ist.

In einem weiteren Funktionsblock 76 wird anhand der anliegenden Eingangsgrößen (Ausgangssignale der Funktionsblöcke 74 und 75) zwischen den beiden Maximalgradienten umgeschaltet. Ein dem Block 73 nachgeschalteter Funktionsblock 77 dient zur Umrechnung des überprüften Sollstroms SVT_id_check auf das für den Stromregler benötigte PWM-Eingangssignal. Eine abschließende Begrenzung in einem Funktionsblock 78 berücksichtigt den von dem Servoantrieb 14 bzw. dem Hydraulikventil 17 zulässigen Maximal- und Minimalstrom.

In einem weiteren Funktionsblock 79 wird der aktuelle Status SVT_status mit dem Status zu einem vorherigen Zeitpunkt, insbesondere zu dem vorangegangenen Rechentakt, verglichen. Zur Ermittelung des Status zu einem vorherigen Zeitpunkt wird der aktuelle Status SVT_status in einem Speicherelement 80 abgelegt und aus diesem zeitverzögert ausgelesen.

Außer dem überprüften Sollstroms SVT_id_check verlässt noch ein weiteres Ausgangssignal SVT_id_OK den Funktionsblock 73. Das Signal SVT_id_OK gibt eine Aussage darüber, ob der Gradient des überprüften Signals SVT_id in Ordnung war oder nicht. Der Gradient des Signals SVT_id wird dann als in Ordnung betrachtet, wenn er kleiner als der Maximalgradient max_grad ist. In diesem Fall ist auch SVT_id_check = STV_id. Falls der Gradient des Signals SVT_id jedoch größer als der Maximalgradient max_grad ist, wird der Gradient des Signals SVT_id entsprechend begrenzt und das begrenzte Signal als SVT id check ausgegeben, wobei dann SVT id check ≠ STV_id ist. In diesem Fall würde das Signal SVT_id_OK einen Wert annehmen, dem entnommen werden kann, dass die Überprüfung des Gradienten SVT_id nicht in Ordnung ist. Der aktuelle Wert des Signals SVT_id_OK wird in einem Speicherelement 81 abgelegt und von dort zeitverzögert ausgelesen. Dadurch liegt an dem Eingang des Funktionsblocks 75 ein Signal an, welches aussagt, ob die letzte Überprüfung des Gradienten des Signals SVT_id (zum Beispiel die Überprüfung zu dem vorangegangenen Rechentakt) in Ordnung war oder nicht.

Zusammenfassend wird erfindungsgemäß also ein Lenksystem 1 mit einem Servoantrieb 14 zur Realisierung einer variablen Momentenunterstützung vorgeschlagen, welches den Grad der Momentenunterstützung in Abhängigkeit von der Drehgeschwindigkeit von einem oder mehreren in dem Lenksystem 1 auftretenden Winkeln δ_S, δ_G ermittelt. Insbesondere wird vorgeschlagen, die Drehgeschwindigkeit $\dot{\delta}_S$ der Lenkhandhabe 2 oder die Drehgeschwindigkeit $\dot{\delta}_G$ des Ritzels 8 des Lenkgetriebes 4 bei der Ermittlung des Grades der Momentenunterstützung zu berücksichtigen.

Das erfindungsgemäße Verfahren ist vorzugsweise in Form eines Computerprogramms realisiert, das auf einem Rechengerät 23, insbesondere auf einem Mikroprozessor, des Steuergeräts 19 des Lenksystems 1 ablaufen kann. Das Computerprogramm ist auf einem Speicherelement, insbesondere auf einem elektrischen Speicherelement 24 in Form eines Read-Only-Speichers, Random-Access-Speichers oder Flash-Speichers, abgespeichert. Zur Ausführung des Computerprogramms auf dem Rechengerät 23, wird das Computerprogramm abschnittsweise oder als ganzes über eine Datenverbindung 25 von dem Speicherelement 24 zu dem Rechengerät 23 übertragen. Durch die Abarbeitung des Computerprogramms auf dem Rechengerät 23 wird das erfindungsgemäße Verfahren ausgeführt. Während der Ausführung des Computerprogramms ermittelte oder empfangene Werte können über die Datenverbindung 25 an das Speicherelement 24 übertragen und dort abgespeichert werden.

Das Computerprogramm kann aus dem Internet 26 heruntergeladen und in dem Speicherelement 24 des Steuergeräts 19 abgelegt werden. Alternativ kann das Computerprogramm auch auf einem Speicherelement 27, insbesondere auf einem elektrischen Datenträger (SD-Karte, CF-Karte, etc.), einem magnetischen Datenträger (Diskette, Festplatte, Speicherband, etc.) oder einem optischen Datenträger (CD-ROM, DVD, etc.), abgespeichert sein. Der Inhalt des Datenträgers 27 kann in das Steuergerät 19 eingelesen und in dem Speicherelement 24 des Steuergeräts 19 abgelegt werden.

**Patentansprüche**

1. Servounterstütztes Lenksystem (1) eines Kraftfahrzeugs, mit einer Lenkhandhabe (2) zur Vorgabe eines Lenkrad-winkels ($\sigma$_S) als Maß für einen gewünschten Lenkwinkel ($\delta$_F) für mindestens ein lenkbares Rad (12, 13) des Kraftfahrzeugs und mit einem Servoantrieb (14) zur Realisierung einer variablen Momentenunterstützung, **dadurch gekennzeichnet, dass** das Lenksystem (1) ein Lenkgetriebe (4) mit einem Ritzel (8), das einen von dem Lenkrad-winkel ($\delta$_S) abhängigen Ritzelwinkel ($\delta$_G) in den Lenkwinkel ($\delta$_F) des mindestens einen lenkbaren Rades (12,13) umsetzt, und dass das Lenksystem (1) Überlagerungsmittel (9) zum Generieren eines Zusatzwinkels ($\delta$_M) und zur Ermittlung des Ritzelwinkels ($\delta$_G) aus einer Überlagerung des Lenkradwinkels ($\delta$_S) mit dem Zusatzwinkel ($\delta$_M) aufweist, wobei der Grad der Momentenunterstützung von der Drehgeschwindigkeit ($\dot{\delta}_G$) des Ritzels (8) als einer die Drehgeschwindigkeit ($\dot{\delta}_S$) der Lenkhandhabe (2) charakterisierenden Größe abhängig ist.

2. Lenksystem (1) nach Anspruch 1, **dadurch gekennzeichnet, dass** der Grad der Momentenunterstützung von einer die Fahrgeschwindigkeit (V_x) des Kraftfahrzeugs charakterisierenden Größe abhängig ist.

3. Lenksystem (1) nach Anspruch 1 oder 2, **dadurch gekennzeichnet, dass** das Lenksystem ein elektronisches Steuergerät (19) zur Ansteuerung des Servoantriebs (14) aufweist, wobei das Steuergerät (19) den Servoantrieb (14) in Abhängigkeit von der die Drehgeschwindigkeit ($\dot{\delta}_S$) der Lenkhandhabe (2) charakterisierenden Größe ansteuert.

4. Lenksystem (1) nach Anspruch 3, **dadurch gekennzeichnet, dass** der Servoantrieb (14) als ein hydraulischer Servoantrieb mit einem elektro-hydraulischen Wandler (17) zur Variation des Grades der Momentenunterstützung ausgebildet ist, wobei das Steuergerät (19) den Wandler (17) ansteuert.

5. Lenksystem (1) nach einem der Ansprüche 1 bis 3, **dadurch gekennzeichnet, dass** der Servoantrieb (14) als ein elektrischer Servoantrieb mit einem Elektromotor zur Realsierung der variablen Momentenunterstützung ausgebildet ist, wobei das Steuergerät (19) den Elektromotor ansteuert.

6. Lenksystem (1) nach einem der Ansprüche 3 bis 5, **dadurch gekennzeichnet, dass** das Steuergerät (19) in Abhängigkeit von der die Drehgeschwindigkeit ($\dot{\delta}_S$) der Lenkhandhabe (2) charakterisierenden Größe ein elektrisches Ansteuersignal (SVT_PWM) für den Servoantrieb (14) ermittelt.

7. Lenksystem (1) nach Anspruch 6, **dadurch gekennzeichnet, dass** das elektrische Ansteuersignal (SVT_PWM) ein Ansteuerstrom ist.

8. Lenksystem (1) nach Anspruch 6 oder 7, **dadurch gekennzeichnet, dass** das ermittelte elektrische Ansteuersignal (SVT_PWM) als Sollwert in eine Ansteuersignalregelung einfließt, wobei das geregelte Ansteuersignal zur Ansteuerung des Servoantriebs (14) herangezogen wird.

9. Lenksystem (1) nach einem der Ansprüche 1 bis 8, **dadurch gekennzeichnet, dass** das Lenksystem (1) Sensoren (20, 21, 22) zum Erfassen von die Drehgeschwindigkeit ($\dot{\delta}_S$) der Lenkhandhabe (2) charakterisierenden Größen ($\delta$_S, $\delta$_M, $\delta$_G) aufweist.

10. Lenksystem (1) nach Anspruch 9, **dadurch gekennzeichnet, dass** ein Sensor die die Drehgeschwindigkeit ($\dot{\delta}_S$) der Lenkhandhabe (2) charakterisierende Größe unmittelbar misst.

11. Lenksystem (1) nach Anspruch 9, **dadurch gekennzeichnet, dass** das Lenksystem (1) Mittel (19) zum Ermitteln der die Drehgeschwindigkeit ($\dot{\delta}_S$) der Lenkhandhabe (2) charakterisierenden Größe aus den gemessenen Größen ($\delta$_S, $\delta$_M, $\delta$_G) aufweist.

12. Verfahren zum Betrieb eines servounterstützten Lenksystems (1) eines Kraftfahrzeugs, bei dem mittels einer Lenk-handhabe (2) ein Lenkradwinkel ($\delta$_S) als Maß für einen gewünschten Lenkwinkel ($\delta$_F) für mindestens ein lenkbares Rad (12, 13) des Kraftfahrzeugs vorgegeben wird und bei dem der Grad der Momentenunterstützung variiert wird, **dadurch gekennzeichnet, dass** das Lenksystem (1) ein Lenkgetriebe - (4) mit einem Ritzel (8) aufweist, durch das ein von dem Lenkradwinkel ($\delta$_S) abhängiger Ritzelwinkel ($\delta$_G) in den Lenkwinkel ($\delta$_F) des mindestens einen lenkbaren Rades (12, 13) umgesetzt wird, und ein Zusatzlenkwinkel ($\delta$_M) mittels Überlagerungsmittel (9) generiert wird und der Ritzelwinkel ($\delta$_G) erfasst wird wobei der Grad der Momentenunterstützung von der Drehgeschwin-digkeit ($\dot{\delta}_G$) des Ritzels (8) als die die Drehgeschwindigkeit ($\dot{\delta}_S$) der Lenkhandhabe (2) charakterisierende Größe abhängig ist.

13. Verfahren nach Anspruch 12, **dadurch gekennzeichnet, dass** der Grad der Momentenunterstützung in Abhängigkeit von einer die Fahrgeschwindigkeit (V_x) des Kraftfahrzeugs charakterisierenden Größe ermittelt wird.

14. Computerprogramm, das auf einem Rechengerät (23), insbesondere auf einem Mikroprozessor, eines Steuergeräts (19) für ein servounterstütztes Lenksystem (1) eines Kraftfahrzeugs ablauffähig ist, **dadurch gekennzeichnet, dass** das Computerprogramm zur Ausführung eines Verfahrens nach einem der Ansprüche 12 bis 13 programmiert ist.

15. Computerprogramm nach Anspruch 14, **dadurch gekennzeichnet, dass** das Computerprogramm auf einem Speicherelement (24, 27), insbesondere auf einem elektronischen, optischen oder magnetischen Speichermedium, abgespeichert ist.

**Claims**

1. Servo-assisted steering system (1) of a motor vehicle, having a steering handle (2) for setting a steering wheel angle ($\delta$_S) as a measure for a desired steer angle ($\delta$_F) for at least one steerable wheel (12, 13) of the motor vehicle, and having a servo drive (14) for realizing variable moment assistance, **characterized in that** the steering system (1) has a steering gear (4) with a pinion (8), which converts a pinion angle ($\delta$_G), which is dependent on the steering wheel angle ($\delta$_S), into the steer angle ($\delta$_F) of the at least one steerable wheel (12, 13), and **in that** the steering system (1) has superposition means (9) for generating an additional angle ($\delta$_M) and for determining the pinion angle ($\delta$_G) from a superposition of the steering wheel angle ($\delta$_S) with the additional angle ($\delta$_M), the degree of moment assistance being dependent on the rotational speed ($\ddot{\delta}_G$) of the pinion (8) as a variable which characterizes the rotational speed ($\ddot{\delta}_S$) of the steering handle (2).

2. Steering system (1) according to Claim 1, **characterized in that** the degree of moment assistance is dependent on a variable which characterizes the driving speed (V_x) of the motor vehicle.

3. Steering system (1) according to Claim 1 or 2, **characterized in that** the steering system has an electronic control unit (19) for the actuation of the servo drive (14), the control unit (19) actuating the servo drive (14) as a function of the variable which characterizes the rotational speed ($\ddot{\delta}_S$) of the steering handle (2).

4. Steering system (1) according to Claim 3, **characterized in that** the servo drive (14) is designed as a hydraulic servo drive with an electrohydraulic converter (17) for varying the degree of moment assistance, the control unit (19) actuating the converter (17).

5. Steering system (1) according to one of Claims 1 to 3, **characterized in that** the servo drive (14) is designed as an electrical servo drive with an electric motor for realizing the variable moment assistance, the control unit (19) actuating the electric motor.

6. Steering system (1) according to one of Claims 3 to 5, **characterized in that** the control unit (19) determines, as a function of the variable which characterizes the rotational speed ($\ddot{\delta}_S$) of the steering handle (2), an electrical actuation signal (SVT_PWM) for the servo drive (14).

7. Steering system (1) according to Claim 6, **characterized in that** the electrical actuation signal (SVT_PWM) is an actuation current.

8. Steering system (1) according to Claim 6 or 7, **characterized in that** the determined electrical actuation signal (SVT_PWM) is input as a setpoint value into an actuation signal regulator, the regulated actuation signal being used for actuating the servo drive (14).

9. Steering system (1) according to one of Claims 1 to 8, **characterized in that** the steering system (1) has sensors (20, 21, 22) for detecting variables ($\delta$_S, $\delta$_M, $\delta$_G) which characterize the rotational speed ($\dot{\delta}_S$) of the steering handle (2).

10. Steering system (1) according to Claim 9, **characterized in that** a sensor directly measures the variable which

**EP 1 568 571 B1**

characterizes the rotational speed ($\dot{\delta}_S$) of the steering handle (2).

11. Steering system (1) according to Claim 9, **characterized in that** the steering system (1) has means (19) for determining from the measured variables ($\delta$_S, $\delta$_M, $\delta$_G) the variable which characterizes the rotational speed ($\dot{\delta}_S$) of the steering handle (2).

12. Method for operating a servo-assisted steering system (1) of a motor vehicle, in which method a steering wheel angle ($\delta$_S) as a measure for a desired steer angle ($\delta$_F) for at least one steerable wheel (12, 13) of the motor vehicle is predefined by means of a steering handle (2), and in which method the degree of moment assistance is varied, **characterized in that** the steering system (1) has a steering gear (4) with a pinion (8), by means of which a pinion angle ($\delta$_G), which is dependent on the steering wheel angle ($\delta$_S), is converted into the steer angle ($\delta$_F) of the at least one steerable wheel (12, 13), and an additional steer angle ($\delta$_M) is generated by superposition means (9) and the pinion angle ($\delta$_G) is detected, the degree of moment assistance being dependent on the rotational speed ($\dot{\delta}_G$) of the pinion (8) as the variable which characterizes the rotational speed ($\dot{\delta}_S$) of the steering handle (2).

13. Method according to Claim 12, **characterized in that** the degree of moment assistance is determined as a function of a variable which characterizes the driving speed (V_x) of the motor vehicle.

14. Computer program which can be executed on a processing unit (23), in particular on a microprocessor, of a control unit (19) for a servo-assisted steering system (1) of a motor vehicle, **characterized in that** the computer program is programmed for carrying out a method according to either of Claims 12 and 13.

15. Computer program according to Claim 14, **characterized in that** the computer program is stored on a memory element (24, 27), in particular on an electronic, optical or magnetic storage medium.

**Revendications**

1. Système de direction (1) à servoassistance d'un véhicule automobile, comprenant une manette de direction (2) pour prédéfinir un angle de volant ($\delta$_S) comme mesure pour un angle de direction ($\delta$_F) souhaité pour au moins une roue orientable (12, 13) du véhicule automobile et comprenant un servomoteur (14) pour réaliser un couple d'assistance variable, **caractérisé en ce que** le système de direction (1) présente un mécanisme de direction (4) muni d'un pignon (8) qui convertit un angle de pignon ($\delta$_G) dépendant de l'angle de volant ($\delta$_S) en l'angle de direction ($\delta$_F) de l'au moins une roue orientable (12, 13), et **en ce que** le système de direction (1) présente des moyens de superposition (9) pour générer un angle supplémentaire ($\delta$_M) et pour déterminer l'angle de pignon ($\delta$_G) à partir d'une superposition de l'angle de volant ($\delta$_S) avec l'angle supplémentaire ($\delta$_M), le degré du couple d'assistance étant dépendant de la vitesse de rotation ($\dot{\delta}_G$) du pignon (8) en tant que l'une des grandeurs qui caractérisent la vitesse de rotation ($\dot{\delta}_S$) de la manette de direction (2).

2. Système de direction (1) selon la revendication 1, **caractérisé en ce que** le degré du couple d'assistance est dépendant d'une grandeur qui caractérise la vitesse de déplacement (V_x) du véhicule automobile.

3. Système de direction (1) selon la revendication 1 ou 2, **caractérisé en ce que** le système de direction présente un contrôleur électronique (19) pour commander le servomoteur (14), le contrôleur (19) commandant le servomoteur (14) en fonction de la grandeur qui caractérise la vitesse de rotation ($\dot{\delta}_S$) de la manette de direction (2).

4. Système de direction (1) selon la revendication 3, **caractérisé en ce que** le servomoteur (14) est réalisé sous la forme d'un servomoteur hydraulique comprenant un convertisseur électro-hydraulique (17) pour faire varier le degré du couple d'assistance, le contrôleur (19) commandant le convertisseur (17).

5. Système de direction (1) selon l'une des revendications 1 à 3, **caractérisé en ce que** le servomoteur (14) est réalisé sous la forme d'un servomoteur électrique comprenant un moteur électrique pour réaliser le couple d'assistance variable, le contrôleur (19) commandant le moteur électrique.

6. Système de direction (1) selon l'une des revendications 3 à 5, **caractérisé en ce que** le contrôleur (19) détermine un signal de commande électrique (SVT_PWM) pour le servomoteur (14) en fonction de la grandeur qui caractérise la vitesse de rotation ($\dot{\delta}_S$) de la manette de direction (2).

**7.** Système de direction (1) selon la revendication 6, **caractérisé en ce que** le signal de commande électrique (SVT_PWM) est un courant de commande.

**8.** Système de direction (1) selon la revendication 6 ou 7, **caractérisé en ce que** le signal de commande électrique (SVT_PWM) déterminé intervient comme valeur de consigne dans une régulation du signal de commande, le signal de commande régulé étant utilisé pour commander le servomoteur (14).

**9.** Système de direction (1) selon l'une des revendications 1 à 8, **caractérisé en ce que** le système de direction (1) présente des capteurs (20, 21, 22) pour détecter les grandeurs ($\delta$_S, $\delta$_M, $\delta$_G) qui caractérisent la vitesse de rotation ($\dot{\delta}_S$) de la manette de direction (2).

**10.** Système de direction (1) selon la revendication 9, **caractérisé en ce qu'**un capteur mesure directement la grandeur qui caractérise la vitesse de rotation ($\dot{\delta}_S$) de,la manette de direction (2).

**11.** Système de direction (1) selon la revendication 9, **caractérisé en ce que** le système de direction (1) présente des moyens (19) pour déterminer la grandeur qui caractérise la vitesse de rotation ($\dot{\delta}_S$) de la manette de direction (2) à partir des grandeurs mesurées ($\delta$_S, $\delta$_M, $\delta$_G).

**12.** Procédé de fonctionnement d'un système de direction (1) à servoassistance d'un véhicule automobile, selon lequel un angle de volant ($\delta$_S) est prédéfini à l'aide d'une manette de direction (2) comme mesure pour un angle de direction ($\delta$_F) souhaité pour au moins une roue orientable (12, 13) du véhicule automobile et selon lequel le degré du couple d'assistance est modifié, **caractérisé en ce que** le système de direction (1) présente un mécanisme de direction (4) muni d'un pignon (8) par le biais duquel un angle de pignon ($\delta$_G) dépendant de l'angle de volant ($\delta$_S) est converti en l'angle de direction ($\delta$_F) de l'au moins une roue orientable (12, 13), et un angle supplémentaire ($\delta$_M) est généré à l'aide de moyens de superposition (9) et l'angle de pignon ($\delta$_G) est détecté, le degré du couple d'assistance étant dépendant de la vitesse de rotation ($\dot{\delta}_G$) du pignon (8) en tant que l'une des grandeurs qui caractérisent la vitesse de rotation ($\dot{\delta}_S$) de la manette de direction (2).

**13.** Procédé selon la revendication 12, **caractérisé en ce que** le degré du couple d'assistance est déterminé en fonction d'une grandeur qui caractérise la vitesse de déplacement (V_x) du véhicule automobile.

**14.** Programme informatique qui peut être exécuté sur un calculateur (23), notamment sur un microprocesseur, d'un contrôleur (19) pour un système de direction (1) à servoassistance d'un véhicule automobile, **caractérisé en ce que** le programme informatique est programmé pour mettre en oeuvre un procédé selon l'une des revendications 12 et 13.

**15.** Programme informatique selon la revendication 14, **caractérisé en ce que** le programme informatique est enregistré sur un élément de mémoire (24, 27), notamment sur un support de mémoire électronique, optique ou magnétique.

Fig. 1

Fig. 2

EP 1 568 571 B1

40

$SVT_{Status}$

$SVT_{Status\ proc}$

$SVT_{Status}$  41

$V_{x\ proc}$

$V_{x\ proc}$

$V_x$  IV

$V_x$

$SVT_{Status}$  42

$\dot{\delta}_{G\ proc}$

$\dot{\delta}_{G\ proc}$

$\dot{\delta}_G$  V

$\dot{\delta}_G$

*Fig. 3*

EP 1 568 571 B1

Fig. 4

EP 1 568 571 B1

$SVT_{Status}$

$\dot{\delta}_G$

SVT$_{Status}$

Reset

Off

Normal

SVT$_{id\ const}$

$V_{x\ fail}$

$\delta_{G\ fail}$

$V_x\_\delta_{G\ fail}$

output

60

new$_{val}$   curr$_{val}$

61

63

62

64

$|U|$

sig$_{raw}$   sig$_{fil}$

sig$_{deriv}$

$\dot{\delta}_{G\ proc}$

*Fig. 5*

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10013711 A1
- US 6640923 B1
- DE 4031316 A1